# EUROPEAN PATENT APPLICATION

(11) **EP 4 723 103 A1**
(43) Date of publication of application: **08.04.2026**
(21) Application number: 24205064.9
(22) Date of filing: 07.10.2024
(51) Int. Cl.: G10L 15/22, G06F 3/16, G10L 15/18

(54) **SYSTEM AND METHOD FOR DYNAMIC NATURAL LANGUAGE COMMUNICATION BETWEEN A HUMAN AND A COMPUTING DEVICE**

(71) Applicant: Universität Zürich, 8006 Zürich (CH)
(72) Inventor: Krauthammer, Michael Olivier, 8135 Langnau am Albis (CH); Rohanian, Morteza, 8055 Zürich (CH)
(74) Representative: Fleuchaus & Gallo Partnerschaft mbB

(57) **Abstract**

System (100), method and computer program product for dynamic natural language communication between a human (1) and a computing device (100) in the context of human-machine interaction. Spoken natural language as audio input (10s) is received from the human. The audio input is discretized into discrete speech units (10s1 to 10sc) in real-time. A generative speech model (120) generates, at respective start timepoints (t1 to tc), current potential responses (pr1 to prc) based on the discrete speech units (10s1 to 10sc). If the audio input (10s) indicates an end of speech, the current potential response (prc) is delivered as machine response to the human (1). If no end of speech is detected, corresponding discrete speech units are monitored for interaction interrupt triggers. If an interaction interrupt trigger (131) is detected, an interaction interrupt response (121) is generated as machine response based on a controllable parameter set (20), and delivered as (1580) the machine response.

## Description

### Technical Field

The present invention generally relates to the field of human-machine interaction, and in particular relates to dynamic natural language communication between a human and a computing device.

### Background

One of the significant challenges in human-machine interaction (HMI) with speech is the uncertainty inherent in speech recognition and response. This contrasts sharply with the speed, fluency, and error tolerance observed in human-human interaction. In particular, current speech robots are not able to conduct overlapping communications with humans which is essential to provide for more human-like transitions, better conversational fluidity, and improved error recovery.

### Summary

There is therefore a need for overcoming the above disadvantages and enabling speech robots to generate rapid, natural responses to spoken statements of a human. This technical problem is solved by embodiments of the invention as described by the independent claims.

In one embodiment, a computer-implemented method is provided for dynamic natural language communication between a human and a computing device in the context of human-machine interaction. The computing device may be a conversational agent or even a robot being able to move and perform physical action to support the human in respective tasks. Such a robot has a speech communication capability which allows the human to interact with the robot via speech.

The method starts with the computing device receiving spoken natural language from the human as an audio input. That is, the computing device has respective audio capturing means (e.g., a microphone) enabling the device to receive such audio signals.

The device further has a discretization module for discretizing the audio input into discrete speech units in real-time. The term "real-time" as used throughout this document is understood by a person skilled in the art of digital data processing as "near real-time" or "quasi real-time". Any digital data processing step (e.g., an image processing step) applied to data captured from the real world (e.g., sensor data to be transferred into visual representations of such sensor data) always results in a delay imposed by the digital data processing steps. For example, there is always a delay between the capturing of an audio signal and a digital processing of said signal. For convenience, only the term "real-time" will be used throughout this document when referring to such "near real-time" behavior of the disclosed methods and systems.

Thereby, each discrete speech unit starts at a respective start timepoint. A person skilled in the art knows how to convert speech audio signals into text units which can be analyzed by a computing device by, for example, using a deep learning model. For example, a regular recurrent network may use a few Bidirectional LSTM layers that process respective feature maps as a series of distinct timesteps or 'frames' that correspond to a desired sequence of output characters. Such a process is described in detail in "Audio Deep Learning Made Simple: Automatic Speech Recognition (ASR), How it Works", by Ketan Doshi published in "Towards Data Science" (https://towardsdatascience.com/) March 25, 2021. Other techniques may also be used for discretization, such as for example, vector quantization (cf., van den Oord et al., Neural Discrete Representation Learning, arXiv:1711.00937v2, May 2018) and clustering.

Then, a generative speech model of the computing device generates at each start timepoint a current potential response based on the discrete speech units. A potential response is therefore generated after each speech unit by taking into account the speech units which have been received in the past. By recomputing the current potential response after each newly received speech unit, the current potential response is always related to the most current state of the human's natural language statement. In other words, the current potential response is updated at each start timepoint even while the human is speaking. In an implementation where the generative speech model is a generative language model, the model is adapted to predict, based on a probabilistic model, a next token in a sequence of previous tokens being relevant for maintaining context and coherence in the communication. Thereby, the probability for an entire sequence of tokens depends on the grounding of the human-machine interaction, the audio input received from the human, and the generated current potential response. Commercially available generative models, like GPT-4, process tokens sequentially, with tokens representing words or sub-words. While such generate responses token by token, they do so after receiving enough input to infer meaningful context. These models can work in parallel at a high level but assume semantically meaningful interactions which leads to overlooking many errors such as disfluencies. The herein disclosed approach continuously generates and updates potential responses as the user is still speaking. It processes incoming audio input in real-time, treating errors as valid input rather than automatically correcting them. This dynamic updating during active speech, especially while considering errors in real-time, provides an important advantage over the typical generative models of the prior art.

The device continuously checks if the audio input indicates speech. In other words, the device is analyzing whether the audio input provided by the human has come to an end (i.e., the human remaining silent).

If such end of speech is detected, the device delivers the current potential response as machine response to the human. This machine response is the last potential response which has been generated based on the discrete speech units of the audio input until the human fell silent. That is, the machine response takes into account the entire semantics of the human's audio input. The machine response includes at least providing a respective (audio) output to the user. In some implementations, for example, the computing device is part of a robot, the machine response may also include physical actions performed by the robot.

If the human continues speaking, that is, if no end of speech is detected by the device because the human provides further audio input following the previous input for which a current potential response has been generated, the device monitors corresponding discrete speech units (of the further audio input) for interaction interrupt triggers. Interaction interrupt triggers can be one or more errors at the current state of the natural language statement, one or more hesitations by the human while speaking, or one or more incomplete phrases in the human's statement. If the device detects such an interaction interrupt trigger, it generates, by the generative speech model, an interaction interrupt response as machine response based on a controllable parameter set, and delivers the machine response to the human. The controllable parameter set may be customizable input provided by the human and refers to any adjustable setting or input that influences how the generative speech model formulates the interaction interrupt response. This may include parameters that have been added to the generative speech model, such as length of pause, tone, formality, the user's emotional or cognitive states or specific instructions on how to handle interruptions. The model may even be set to interrupt rarely, even if it recognizes an interruption. A particular interaction interrupt response can include one or more corrections, one or more prompts, or one or more reminders for the human. Again, the computing device ensures that the machine response is grounded, and delivers the machine response via a respective audio interface to the human.

Else, if no interaction interrupt trigger is detected, the system reapplies the discretizing step and all subsequent steps to any additionally received audio input.

The device dynamically decides whether the current potential response which is based on the past speech units is to be provided to the human. This is the case if the human speaks fluently a meaningful statement which ends appropriately. Otherwise, if the monitoring function detects an interaction interrupt trigger, the device provides further support to the human by providing an appropriate interaction interrupt response which takes into account the human's issues or problems in formulating a fluent and meaningful statement. Advantageously, the probability for the generated interaction interrupt response depends on the generated current potential response and the respective interaction interrupt trigger.

Advantageously, the device ensures "grounding" of the human-machine interaction before delivering any machine response to the human. Grounding refers to the process of establishing a shared understanding between the human and the computing device, ensuring that both parties have a common interpretation of the conversation's context and content. The concept of grounding ids discussed in detail in the following references: Harnad, Stevan. "The symbol grounding problem." Physica D: Nonlinear Phenomena 42.1-3

(1990): 335-346, and Brennan, Susan E. "The grounding problem in conversations with and through computers." Social and cognitive approaches to interpersonal communication. Psychology Press, 2014. 201-225.

When ensuring grounding of the human-machine interaction, the device advantageously checks human-machine interaction history and past interaction behavior of the human with regard to indications of a lack of common ground in the communication between the human and the computing device. If a grounding condition is fulfilled in that there remains no such indication of a lack of common ground, grounding of the human-machine interaction is confirmed. Else, if the grounding condition is not fulfilled, the device generates (by the speech model) and delivers a clarification response to the human for re-establishing grounding.

This grounding approach can also be seen as an incremental grounding approach, where the computing device evaluates the human's spoken statements after each speech unit and ensures grounding to generate the appropriate machine response to give the best possible support to the human to finalize an incomplete spoken natural language statement.

In one embodiment, temporal status flags are assigned to the generated current potential response and to the generated interaction interrupt response. A state machine is used to set the or change respective status flags by:
- setting an initial temporal status flag for a respective response to indicate a planned status where an action is anticipated but not yet started;
- changing the initial temporal status flag into an active status flag to indicate that the action is currently in progress; and
- changing the active status flag into a completed status flag to indicate that the action is completed.

In this embodiment, the computing device makes decisions based on the temporal status of the generated current potential response or interaction interrupt response and the context of the communication in that:
- the current potential response is set to the active status if it is in the planned status and an end of speech but no interaction interrupt trigger is detected; and
- the current potential response is substituted by the interaction interrupt response in planned status if the current potential response is in the planned status and an interaction interrupt trigger is detected.

In one embodiment, the computer-implemented method may continue with receiving a spoken interrupt signal from the human during the delivery of the machine response. That is, the human sees a need to interrupt the response of the computing device, or the human may not agree to what has been provided as a response so far, or the human may not understand it and ask for clarification. There may be further reasons for the human to interrupt.

The computing device is then processing the spoken interrupt signal from the human as a new audio input. The processing occurs in the same way as described above for the audio input received previously. The generative speech model is the adjusting the machine response based on the spoken interrupt signal, ensuring the grounding of the human-machine interaction is maintained, and delivers an adjusted machine response to the human. Thereby, the monitoring function may be adapted to recognize if the new audio input includes perhaps just a confirmation of the previously provided machine response by said human. In this case, the interruption does not trigger an adjustment of the previously presented machine response because the human apparently agrees to it. That is, the herein disclosed approach avoids recalculating responses when unnecessary, helping to maintain the conversation's flow. It is to be noted that this real-time adjustment ensures that grounding is continually maintained throughout the interaction.

In one embodiment, a computer program product is provided for dynamic natural language communication between a human and a computing device. The computer-readable instructions, when loaded into a memory of a computing device and executed by one or more processors of the computing device, cause the computing device to perform the herein disclosed computer-implemented method.

In one embodiment, a computing device is provided for dynamic natural language communication between a human and the computing device. The computing device has a memory storing computer-readable instructions implementing functional units, and further has one or more processors adapted for executing the functional units. The functional units are adapted to perform the herein disclosed computer-implemented method when being executed. That is, the computing device instantiates such functional unit at runtime to perform the herein disclosed functions

Further aspects of the invention will be realized and attained by means of the elements and combinations particularly depicted in the appended claims. It is to be understood that both the foregoing general description and the following detailed description are exemplary and explanatory only, and are not restrictive of the invention as described.

### Brief Description of the Drawings

FIG. 1 illustrates a block diagram of a computing device for dynamic natural language communication between a human and the computing device according to an embodiment;
FIG. 2 is a simplified flow chart illustrating a computer-implemented method for dynamic natural language communication between a human and a computing device in the context of human-machine interaction according to an embodiment;
FIG. 3 illustrates details of delivering a machine response while ensuring grounding according to an embodiment;
FIG. 4 illustrates the setting of status flags for generated machine responses according to an embodiment; and
FIG. 5 is a diagram that shows an example of a generic computer device and a generic mobile computer device, which may be used in embodiments of the invention.

### Detailed Description

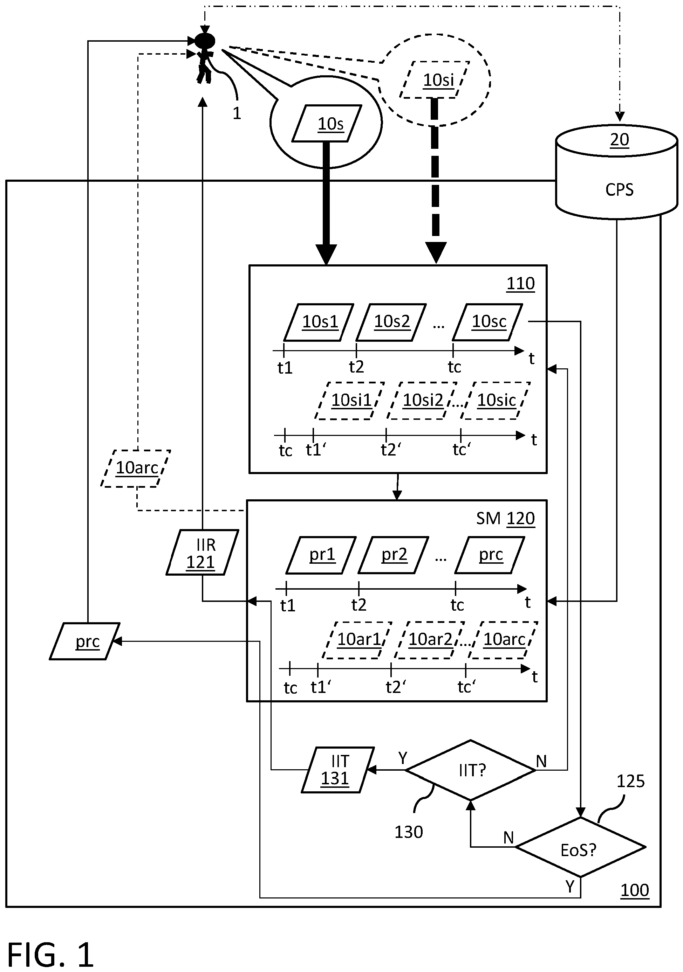

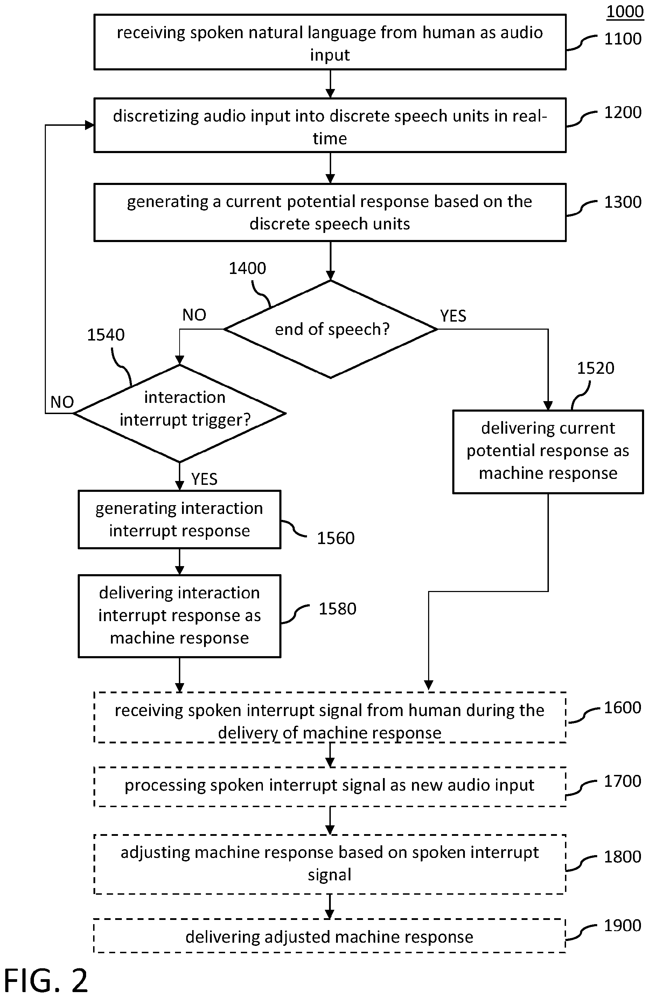

FIG. 1 illustrates a block diagram including an example embodiment of a computing device (computer system) 100 for dynamic natural language communication between a human 1 and the computing device 100. FIG. 2 is a simplified flow chart of a computer implemented method 1000 for dynamic natural language communication between said human 1 and the computing device 100 in the context of human-machine interaction according to an embodiment. Optional elements are illustrated by dashed frames. FIG. 1 is described now in the context of FIG. 2A. For this reason, reference numbers of FIG. 1 and FIG. 2A are used in the following description without explicitly referring to the respective figure.

Computing device 100 has a human-machine interface (not shown) which is adapted to receive 1100 spoken natural language from the human as an audio input 10s (optionally 10si), and also to provide spoken natural language statements prc (optionally 10arc) as audio outputs to the user. For example, the human-machine interface includes a microphone for capturing the user's audio input, and further includes at least one loudspeaker to provide audio outputs to the user 1.

Once device 100 has received 1100 spoken natural language as an audio input 10s from the human 1, a discretizer module 110 discretizes 1200 the audio input into discrete speech units 10s1 to 10sc in real-time. Each discrete speech unit starts at a respective start timepoint t1 to tc. A person skilled in the art may use techniques such as Automatic Speech Recognition (ASR), vector quantization, or clustering for implementing the discretizer 110.

A generative speech model SM 120 generates 1300, at each start timepoint t1 to tc, a current potential response pr1 to prc based on the discrete speech units 10s1 to 10sc. That is, SM 120 continuously generates and updates potential responses as the human user 1 is still speaking. Thereby it processes the discrete speech units in real-time and treats errors as valid input rather than automatically correcting them. This dynamic updating during active speech is particularly advantageous for users which suffer from restrictions in the ability to communicate due to a respective illness (e.g., cognitive disorders). For example, patients suffering from dementia often have problems to find words and complete a full sentence. In such situations, the herein disclosed approach supports the users in nevertheless leading meaningful communications with the device.

For example, human user 1 may begin speaking: **"Ca..."** Even before the user has completed the first word of an intended natural language statement, the discretizer 110 generates a corresponding first discrete speech unit 10s1, which in the example corresponds to the already received audio input **"Ca...".** In the following, a phonetic version for a discrete speech unit uses the notation /*/. In this notation, the phonetic version of **"Ca..."** reads /ka/. The discretizing 1200 of audio input into discrete speech units is continually performed by the discretizer as long as audio input 10s is received from the user 1.

SM 120 immediately (in real-time) generates 1300, for the start time point t1 associated with discrete speech unit 10s1 (DSU_1 in the following example), a current potential response pr1 based on the discrete speech unit DSU_1. In the example, this potential system response may confirm what has been understood by SM 120 so far and ask a clarifying question because the so far received speech unit does not yet have a semantic meaning. Pr1 at t1 may include: **"Ca? Are you trying to say 'can'?"** (phonetic version: /ka/ /αr/ /ju/ /'tra 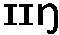 / /tu/ /sei/ /kæn/).

As this is simply a potential response at that stage (t1), the current potential response pr1 may be flagged by an indicator "planned", indicating that the response is not yet to be sent as an audio output (in accordance with its phonetic version). The following formula F1 summarizes the current potential response generation at t1 in this example to discrete speech unit DSU_1 (responseDSU_1 with type "response" and state "planned"):
F1:
**responseDSU_1 = CreateDSU("response", "Ca? Are you trying to say 'can'?", "planned")** The phonetic version of responseDSU_1 for audio output reads: /ka/ /αr/ /ju/ /'tra 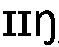 / /tu/ /sei/ /kæn/.

In the example, the user continues with his/her intended natural language statement (no end of speech): **"Can** ...". The corresponding discrete speech unit 10s2 (DSU_2) reads in the phonetic version: /kæn/. Still, SM120 cannot derive a meaningful response to the speech unit and, therefore, generates again a potential response which would try to support the user in the conversation: For example, a generated potential current response to DSU_2 is described by formula F2:
**responseDSU_2 = CreateDSU("response", "Can you? Can you explain more?", "planned")** The phonetic version of responseDSU_2 reads: /kæn/ /ju/ /kæn/ /ju/ /ik'splein/ /mor/.

The user continues (no end of speech): **"Can you** ...". The corresponding discrete speech units DSU_3 read in the phonetic version: /kæn/ /ju/. Still, SM120 cannot derive meaningful semantics from the speech unit DSU_3 and, therefore, generates again a potential response which would try to support the user in the conversation: For example, a generated potential current response to DSU_3 is described by formula F3: **responseDSU_3 = CreateDSU("response", "Can you what? Can you explain more?", "planned")**
The phonetic version for potential audio output reads: kæn/ /ju/ /w∧t/ /kæn/ /ju/ /ik'splein/ /mor/

The user now completes the natural language statement in the form the following question: **"Can you tell me the capital of France?"** and remains silent afterwards. Now, check function 125 detects (Y) an end of speech in the received audio input 10s. The corresponding discrete speech units DSU_4 read in the phonetic version: /kæn/ /ju/ /tεl/ /mi/ / 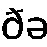 / /'kaepitl/ /∧v/ /fræns/. SM 120 can now derive meaningful semantics from the speech units DSU_4 and, therefore, generates a current machine response prc which answers the user's question in DSU_4. This potential response is described by formula F4: **responseDSU_4** = **CreateDSU("response", "The capital of France is Paris.", "active").** The phonetic version for potential audio output reads: / 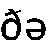 / /'kæpitl/ /∧v/ /fræns/ /iz/ /'pæris/

While potential current responses were generated 1300 for speech units DSU_1 to DSU_3, the user always continued speaking, resulting in respective audio input. Therefore, check 1400 did not detect an end of speech (NO). Further, no interaction interrupt trigger was detected by the interaction interrupt trigger check 1540 (NO) performed by a further check function of a monitoring module 130. Therefore, the discretizer 110 continues to discretize the received audio input 10s (arrow N 130 → 110).

However, after the discretization into DSU_4, the user remains silent. Thus, check 1400 detects an end of speech. This leads to setting the state of responseDSU_4 to "active" so that the latest current potential response prc generated for start time tc is now delivered 1520 as machine response prc to the user 1 in the form of a respective audio output.

The monitoring module 130 continuously monitors 1400 the discrete speech units 10s1 to 10sc for interaction interrupt triggers, adjusting responses based on the controllable parameter set, as long as no (N) end of speech is detected by check function 125, and ensures grounding of the human-machine interaction. If module 130 detects (Y) an interaction interrupt trigger IIT 131, SM 120 generates 1520 an interaction interrupt response 121 as machine response based on a controllable parameter set 20, which ensures that the machine response is grounded. The interaction interrupt response IIR 121 is then delivered 1540 to user 1. Thereby, the monitoring module is active (i.e., checking for interaction interrupt triggers) all the time as long as no end of speech is detected and can therefore trigger device reactions to any kind of interrupt indicators contained in the user's natural language statements.

In an example scenario deviating from above example scenario, it is assumed that after the discrete speech units DSU_4 the device does not yet detect an end of speech. In this case the generated current response would be in the "planned" state (potential response). This is shown in formula F4':
**responseDSU_4'** = **CreateDSU("response", "The capital of France is Paris.", "planned").** In other words, the user continues speaking after the question asked in DSU_4. For example, the user may have noticed that actually a not intended question was asked and wants to correct this right after having asked the question.

Therefore, the user continues speaking: "Ac...". The corresponding discrete speech unit DSU_5 reads in the phonetic version: /aek/. The monitoring module 130 detects DSU_5 a potential interaction interrupt trigger because apparently the earlier question in DSU_4 was not the final say of the user. SM120 now generates a corresponding potential interaction interrupt response (based on the controllable parameter set 20, which includes instructions like tone, pause length, and handling interruptions to align with the user's cognitive abilities and emotional states) as described by formula F5:
**responseDSU_5** = **CreateDSU("response", "Ac? Did you mean 'actually'?", "planned")** The phonetic version for potential audio output reads: /aek/ /did/ /ju/ /min/ /'ækt 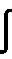 u 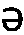 li/.

The user continues by saying: **"Actually...".** The corresponding discrete speech unit DSU_6 reads in the phonetic version: /'ækt 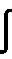 u 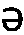 li/. The monitoring module interprets DSU_6 as continuation of IIT 131 and SM 120 updates the potential interaction interrupt response 121 based on the controllable parameter set 20 as described by formula
F6:
**responseDSU_6** = **CreateDSU("response", "Actually what? Can you explain more?", "planned")**

The phonetic version for potential audio output reads: /'ækt 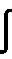 u 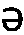 li/ /w∧t/ /kæn/ /ju/ /ik'splin/ /mor/. The controllable parameter set 20 comprises adjustable parameters for influencing how SM 120 formulates the interaction interrupt response 121. The adjustable parameters thereby allow to define a setting for SM 120 that ensures that the interaction interrupt response is generated in line with the user's cognitive capabilities. This can include settings for parameters like the length of pause (between words or subordinate clause parts in a sentence), the tone of conversation, the level of formality in the conversation, and for specific instructions on how to handle interruptions which are added to the model.

For example, the prompt structure may be modified or the speech model's parameters may be adjusted during fine-tuning or through prompt engineering. In a first implementation, instructions may be incorporated in prompts provided by an administrator or developer of the speech model. In this implementation, instructions on how to handle interruptions can be embedded within a prompt provided to the generative speech model. The prompt may include specific rules or instructions for managing interruptions, such as whether to pause, ask clarifying questions, or resume from the last point of coherence.

For example, a prompt can be structured as: "The user might interrupt mid-sentence. If interrupted, repeat the last complete phrase and ask, 'Could you please clarify?' before continuing."

In a second implementation, fine-tuning can be enabled using interrupt handling data. In this implementation, during the training or fine-tuning phase, the speech model can be trained on specific datasets that contain instances of conversational interruptions. Annotations in the data can specify how the model should respond in various interruption scenarios (e.g., pause length, tone adjustment, or repeating prior phrases) as shown by the following example:
{"input": "The user says, 'I would like to order a pizza...'",
"interrupt": "yes, but add extra cheese",
"response": "I understand. You'd like to add extra cheese to your pizza. Is that correct?"}

In a third implementation, custom parameter adjustments may be performed. In this implementation, instructions on how to handle interruptions can be encoded as part of the controllable parameters that are passed to the generative speech model at runtime. These parameters control how the speech model responds when an interruption is detected, using a dynamic set of variables like pause length or tone.

For instance, the model may use predefined settings for handling interruptions such as:
- Pause Length
- Tone and Formality: Setting the tone to be polite or informal depending on the context.
- Clarification Behavior: Directing the model to ask clarifying questions

Examples are:
- "pause_length": "1.2s",
- "tone": "formal",
- "interruption response": "Could you clarify your request?"

Finally, the user completes the statement: **"Actually, I meant the capital of Italy."** (phonetic version: /'aektjuali/ /ai/ /mεnt/ / 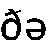 / /'kæpitl/ /∧v/ /'itali/) and remains silent afterwards. SM 120 can now understand the full semantics of the interrupting question contained in updated interaction interrupt trigger 131. Further, an end of speech is recognized which terminates the interaction interrupt trigger. The user's corrective statement (of an earlier erroneous statement) starting with **"Actually, I meant"** is detected as interaction interrupt trigger which causes SM 120 to generate 1560 a respective interaction interrupt response IIR 121 which is then delivered 1580 as audio output to the user to provide a respectively corrected response. The delivered response is described by formula F7:
**responseDSU_7** = **CreateDSU("response", "The capital of Italy** is **Rome.", "active")** The phonetic version for the delivered audio output reads: / 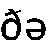 / /'kæpitl/ /∧v/ /'it 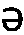 li/ /iz/ /ro 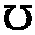 m/. Thereby, the probability of generating an interaction interrupt response (IIR) 121 is determined by evaluating both the likelihood of the current potential response being relevant to the conversation and the impact of the detected interaction interrupt trigger (IIT) 131. The system calculates the probability of continuing with the potential response versus switching to an IIR based on how significantly the IIT alters the context of the user's speech. If the IIT indicates a substantial change or correction in the user's input, the likelihood of generating the IIR increases accordingly.

The example illustrates, the monitoring module 130 in combination with SM 120 can dynamically respond to situations where a user makes corrections to earlier made statements. The final machine response is consistent with corrected user question. In other words, grounding is ensured when interaction interrupt response is provided to the user. The herein disclosed approach enables computing device 100 to react to any interaction interrupt trigger, such one or more corrections by the user, or one or more prompts or reminders by the user, in a flexible manner so that potential responses which have been generated by SM 120 in response to earlier statements of the user can be suppressed if they do not fit anymore into the current context of the user's interaction interruption trigger. It is to be noted that the interaction interruption trigger 131 is an implicit indicator in a user's natural language statement which is interpreted by the device such that the user's earlier statement is not yet final and, therefore, a corresponding potential response should not be delivered to the user. The user is therefore not burdened by irrelevant machine responses that do not align with the user's current thoughts. This is particularly advantageous for users with cognitive disabilities, who may struggle to process responses based on earlier statements when their focus has already shifted to a new topic. In this way, the system ensures that all responses are grounded in the user's current intent, facilitating smoother and more effective communication. In other words, the system ensures grounding of delivered responses at any time and thus enables a smooth conversation between the human and the machine even for cognitively challenged users.

Therefore, while the response still being delivered by the device, the user begins speaking again. This new audio input captured during the response delivery is considered by the monitoring module as an interaction interrupt trigger. In such a situation, the device may stop the response delivery immediately upon the detection of the interaction interrupt trigger.

The following example scenario illustrates how the computing device can barge in to support the user in his/her conversation with the device in a case where the user apparently gets lost in the conversation. It is assumed that the above conversation examples occurred prior to this example scenario. The user now has something in mind and initiates a new conversation: " **The..."** . The corresponding discrete speech unit DSU_8 reads in the phonetic version: / 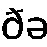 /. SM 120 generates a corresponding potential current response as described by formula F8:
**responseDSU_8 = CreateISU("response", "Actually what? Can you explain more?", "planned")**
The phonetic version for potential audio output reads: /'ækt 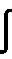 u 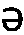 li/ /w∧t/ /kæn/ /ju//ik'splein/ /mor/.

The user continues: " The ca..." . The corresponding discrete speech unit DSU_9 reads in the phonetic version: / 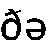 / /kae/. SM 120 generates a corresponding potential current response as described by formula F9:
**responseDSU_9** = **CreateISU("response", "The ca? Are you trying to say 'capital'?", "planned")**
The phonetic version for potential audio output reads: | 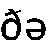 | /kæ/ /αr/ /ju/ /'tra 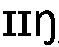 / /tu/ /sei/ /'kaepitl/.

The user continues: **"The capital of Austria is, um...".** The corresponding discrete speech unit DSU_10 reads in the phonetic version: / 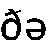 / /'kæpitl/ /∧v/ /'pstri 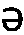 / /iz/ /∧m/. The monitoring module 130 now detects again an interaction interrupt trigger in the form of a hesitation because the user remains silent after "um..." and the phrase or question of the user is incomplete. Therefore, SM 120 generates a barge-in response with a response type "prompt" as interaction interrupt response to assist the user in completing the statement. This prompt can be summarized by formula F10:
**bargeInDSU_10** = **CreateDSU("prompt", "Are you trying to ask about the capital of Austria?", "active")**
The state of this prompt is set to "active" because the prompt is to be delivered as a machine response to the user directly after its generation to assist the user in the further conversation. The phonetic version which is delivered as audio output reads: /αr/ /ju/ /'tra 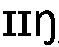 / /tu/ /aesk/ / 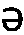 ' baut/ / 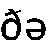 / /' kaepitl/ |∧v| /'pstri 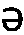 /.

Dependent on the user's answer, SM 120 may finally generate and deliver the answer to this question as a respective machine response: **"The capital of Austria is Vienna".**

In an optional embodiment, the herein disclosed approach even allows a user to interrupt the device while delivering a response and enables the device to respond to such natural language interruption statements in a quite natural interaction manner. In this embodiment, the system receives 1600 a spoken interrupt signal 10si from the human user 1 during the delivery of the machine response. The currently delivered machine response can be a generated response prc after an end of speech detection, or it can be an interaction interrupt response 121. The spoken interrupt signal 10si is processed 1700 as a new audio input in the same way as previously received human audio inputs. That is, the discretizer 110 generates corresponding discrete speech units 10si1, 10si2, ..., 10sic at respective starting time points t1', t2', ..., tc', wherein tc' is the starting time point of the current discrete speech unit 10sic.

SM 120 adjusts 1800 the machine response based on the spoken interrupt signal 10si and ensures that the grounding of the human-machine interaction is maintained. In the example of FIG. 1, for each discrete speech unit 10si1, 10si2, ..., 10sic a potential adjusted response 10ar1, 10ar2, ..., 10arc is generated. It is assumed that after speech unit 10sic the user remains silent (i.e., end of speech is detected) and the current potential adjusted response 10arc is delivered 1900 to the user 1 as an adjusted machine response.

It is to be noted that in case the device is a robot, the spoken interrupt signal may even interrupt an action which was triggered in response to the user's earlier audio input. For example, if the user instructed the robot with: **"Put this item to the right"** and the robot already started executing a corresponding action in response to the instruction, the user may recognize an error in the instruction and try to correct this before the response action of the robot to the initial instruction is terminated. For example, the user says: **"Stop!** I **meant to the left".** The robot detects a spoken interrupt signal and immediately stops the currently performed action. It is to be noted that a spoken interrupt signal is not necessarily based on respective trigger words (e.g., stop) alone. Rather, a spoken interrupt signal detected by the system may be specified by various indicators such as changes in tone, urgency, or certain trigger words. In the example, the robot detects the user's correction ("Stop! I meant to the left") and interprets this as an interrupt signal. This is not strictly limited to particular words, but could be based on a combination of:
- Trigger words (keywords) (e.g., "Stop!")
- Tone or urgency in the user's voice
- Contextual understanding that the user is issuing a correction or modification to the previous instruction

That is, the system can use both linguistic cues (like specific words) and contextual analysis to recognize that the user is issuing a corrective interrupt. This is more of a classification task rather than simply identifying specific keywords. The respective interaction interrupt response would include to move said item to the left. That is, in addition to an audio output confirmation such as: **"Ok, I'll put the item to the left",** the robot also changes its action accordingly.

However, in cases where the new (interrupting) audio input contains a user statement with a confirmation of the machine response by said user, the device would not treat the new audio input as a spoken interrupt signal and would just wait for further audio signals to arrive before continuing the conversation.

In general, SM 120 always generates potential current responses for a time point which corresponds to the starting time point of a respective discrete speech unit. However, in a situation where the user does not start a conversation at all, it can be desirable that the computing device takes the initiative to start a conversation and motivate the user to speaking. For this purpose, in one embodiment, SM 120 may generate a preemptive potential response even before receiving any spoken natural language from the user. For example, a speech detection device (e.g. microphone) of the computing device may be already activated but no speech (audio input) has been detected yet. The preemptive potential response can be based on either the user's past interaction history or can include predefined system prompts adapted to encourage user engagement. For example, if the user typically starts the day with drinking a coffee, the preemptive potential response can be: **"Would you like to start your day with a coffee?"** The preemptive potential response can be seen as current potential response if no spoken natural language statement is received from the user within a predefined time interval and then be delivered after this time interval.

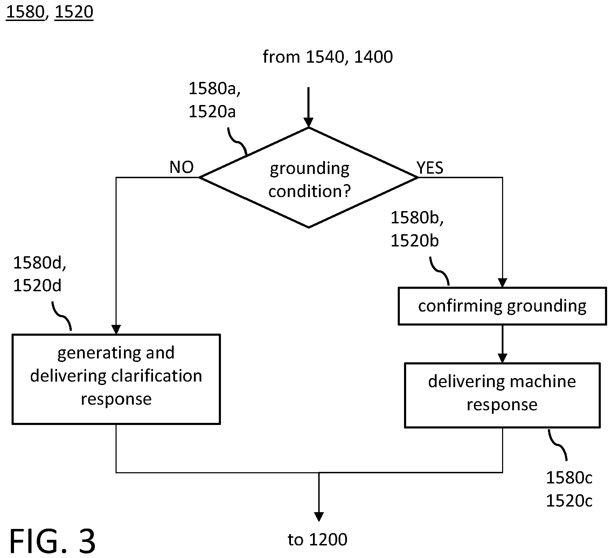

Advantageously, the computing device ensures grounding of the human-machine interaction before delivering 1520, 1580 any machine response to the human as illustrated in FIG. 3. This includes checking 1520a, 1580a, as a grounding condition, if the human-machine interaction history and past interaction behavior of the human are free of indications of a lack of common ground in the human-machine interaction. If the grounding condition is fulfilled (YES), grounding of the human-machine interaction is confirmed 1520b, 1580b and the respective machine response is delivered 1520c, 1580c. If the grounding condition is not fulfilled (NO), the device generates and delivers 1520d, 1580d a clarification response to the human for re-establishing grounding. In other words, the device checks, based on the context and history of the communication, whether the human and the computing device have a shared (common) understanding of the communication. That is, it is about verifying if both parties understand each other by examining the context and detecting if, for example, the conversation becomes incoherent. In other words, the device continuously verifies that both communication parties are on the same page (i.e., both communication partners mutually understand each other). If the conversation becomes incoherent, the device triggers respective actions like clarifications.

If a corrective action successfully re-establishes grounding, the conversation can continue. For example, if the device detects a misunderstanding, it may issue a clarification prompt (as a machine response), asking the user for confirmation or additional input (e.g., "Did you mean...?" or "Can you clarify...?"). This is a recursive path because the clarification prompt may need further clarification if the user's response remains ambiguous.

If the user provides a corrective input (e.g., correcting the interpretation by the computing device), the device can take appropriate action to align with the updated information. An example for a corrective action is a speech correction. For example, the user says, "Actually, I meant..." This signals to the device that the previous context was incorrect, and it updates its response based on the new input. Once the corrective action or clarification resolves the misunderstanding, the computing device returns to the normal interaction flow: The conversation continues based on the newly updated or clarified input. The device may issue a confirming response like "Got it! Moving on to..." or "Okay, understood."

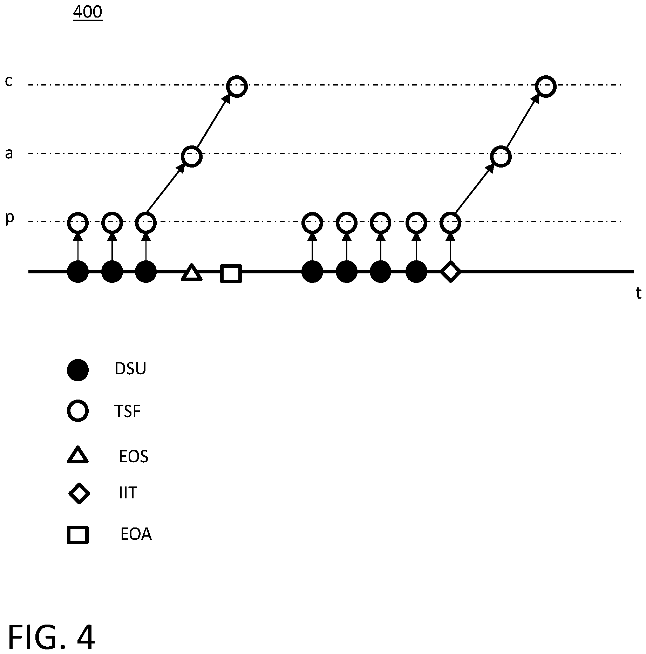

FIG. 4 illustrates the setting of status flags p, c, a (illustrated by circles) for responses generated by the computing device. As already demonstrated in the above example scenario, current potential responses are generated with a temporal status flag indicating a planned status p each time when a discrete speech unit DSU (illustrated by black bullets) is coming out of the discretizer. Once a generated response is delivered as machine response to the human, the status flag is changed from the planned status p to an active status a. This may occur when an end of speech EOS (triangle representation) is detected in which case the current potential response is set to an active status triggering the delivery of the machine response. In case an interaction interrupt trigger IIT (diamond representation) is detected, the computing device generates an interaction interrupt response which is also initially in the planned state p. The state is changed to active a for delivery as machine response. Once the response action of the computing device is completed, the status of the response may be set to completed c. In case the machine response is only associated with delivering a respective audio output to the human, the completed status c is set immediately after the audio output terminates. In case the response action is associated with a physical action (e.g., a robot moving an item in response to the user's instructions and being interrupted by the user as in the above example), the completed state c is set only after the physical action has terminated (end of action EOA is detected), too, which typically will be a while after the respective audio output came to an end.

A current potential response is set to the active status if it is in the planned status and an end of speech EOS is detected but no interaction interrupt trigger IIT. The current potential response is substituted by an interaction interrupt response in planned status p if the current potential response is in the planned status and an interaction interrupt trigger IIT is detected. Then the interaction interrupt response is delivered instead of the current potential response.

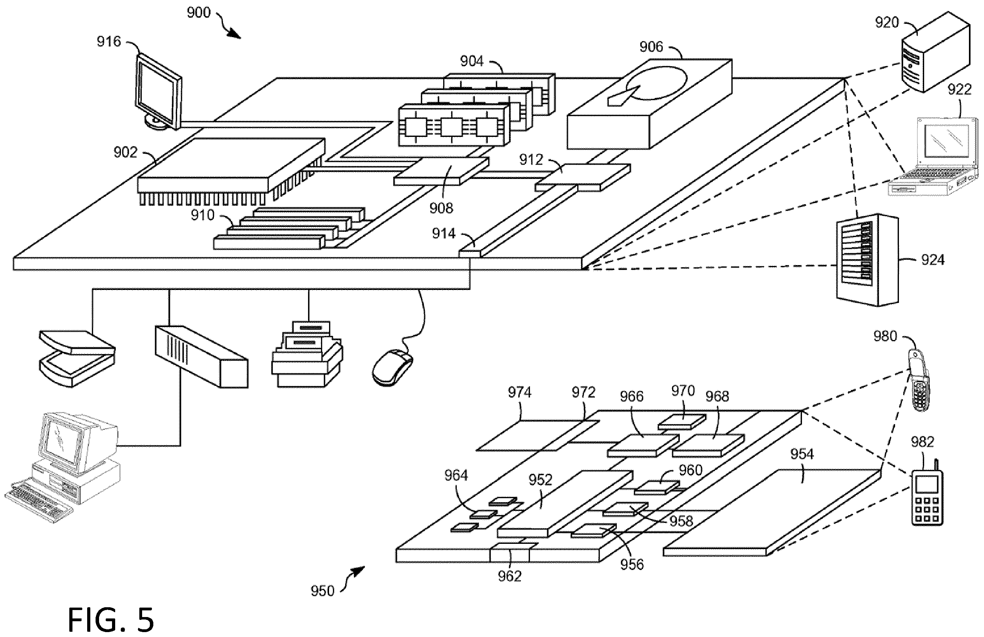

FIG. 5 is a diagram that shows an example of a generic computing device 900 and a generic mobile computing device 950, which may be used with the techniques described here. Computing device 900 relates in an exemplary embodiment to computing device 100 (cf. FIG. 1). Computing device 950 is intended to represent various forms of mobile devices, such as personal digital assistants, cellular telephones, smart phones, and other similar computing devices. Such front ends may also be implemented as integral parts of the computing device 100. In an exemplary embodiment of this disclosure the computing device 950 may serve as a frontend control device of the device 900. For example, the user may use the computing device 950 for capturing the audio input provided to computing device 900. Also, the audio output provided by computing device 900 may be played to the user via mobile computing device 950. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low-speed interface 912 connecting to low-speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high-speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high-speed controller 908 manages bandwidth-intensive operations for the computing device 900, while the low-speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, ZigBee, WLAN, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, ZigBee or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems.

## Claims

1. A computer-implemented method (1000) for dynamic natural language communication between a human (1) and a computing device (100) in the context of human-machine interaction, comprising:
receiving (1100), from the human (1), spoken natural language as audio input (10s);
discretizing (1200) the audio input into discrete speech units (10s1 to 10sc) in real-time, wherein each discrete speech unit starts at a respective start timepoint (t1 to tn);
generating (1300), by a generative speech model (120), at each start timepoint (t1 to tc), a current potential response (pr1 to prc) based on the discrete speech units (10s1 to 10sc);
checking (1400) if the audio input (10s) indicates an end of speech;
if the end of speech is detected, delivering (1520) the current potential response (prc) as machine response to the human (1);
else, if no end of speech is detected, monitoring (1540) corresponding discrete speech units for interaction interrupt triggers;
if an interaction interrupt trigger (131) is detected, generating (1560), by the generative speech model (120), an interaction interrupt response (121) as machine response based on a controllable parameter set (20), and delivering (1580) the machine response;
else, if no interaction interrupt trigger is detected, reapplying discretizing (1200) and all subsequent steps to additionally received audio input.

2. The method of claim 1, further comprising:
receiving (1600) a spoken interrupt signal (10si) from the human (1) during the delivery of the machine response (121, prc);
processing (1700) the spoken interrupt signal (10si) from the human as a new audio input;
adjusting (1800) the machine response based on the spoken interrupt signal,
ensuring grounding of the human-machine interaction is maintained, and delivering (1900) an adjusted machine response.

3. The method of claim 2, wherein the new audio input is not a confirmation of the machine response by the human.

4. The method of any of the previous claims, wherein a particular interaction interrupt trigger comprises one or more of any of the following: one or more errors, one or more hesitations, and one or more incomplete phrases.

5. The method of any of the previous claims, wherein a particular interaction interrupt response comprises any of the following: one or more corrections, one or more prompts, and one or more reminders.

6. The method of any of the previous claims, wherein delivering (1520, 1580) any machine response to the human, comprises, as a preceding step, ensuring grounding of the human-machine interaction by:
checking, as a grounding condition, if the human-machine interaction history and past interaction behavior of the human are free of indications of a lack of common ground in the human-machine interaction;
if the grounding condition is fulfilled, confirming grounding of the human-machine interaction;
else, generating and delivering a clarification response for re-establishing grounding.

7. The method of any of the previous claims, wherein the generative speech model (120) is a generative language model adapted to predict, based on a probabilistic model, a next token in a sequence of previous tokens being relevant for maintaining context and coherence in the communication, wherein the probability determined by the generative speech model for an entire sequence of tokens depends on the grounding of the human-machine interaction, the audio input received from the human, and the generated current potential response.

8. The method of any of the previous claims, wherein the probability for the generated interaction interrupt response (121) depends on the generated current potential response (prc) and the respective interaction interrupt trigger (131).

9. The method of any of the previous claims, wherein temporal status flags are assigned to the generated current potential response and the generated interaction interrupt response by:
setting an initial temporal status flag for a respective response to indicate a planned status where an action is anticipated but not yet started;
changing the initial temporal status flag into an active status flag to indicate that the action is currently in progress; and
changing the active status flag into a completed status flag to indicate that the action is completed.

10. The method of claim 9, wherein the computing device makes decisions based on the temporal status of the generated current potential response or interaction interrupt response and the context of the communication in that:
the current potential response is set to the active status if it is in the planned status and an end of speech but no interaction interrupt trigger is detected; and
the current potential response is substituted by the interaction interrupt response in planned status if the current potential response is in the planned status and an interaction interrupt trigger is detected.

11. The method of any of the previous claims, wherein the controllable parameter set (20) comprises adjustable parameters for influencing how the generative speech model (120) formulates the interaction interrupt response (121), comprising any of the following parameters that have been added to the generative speech model: length of pause, tone, formality, and specific instructions on how to handle interruptions.

12. The method of any of the previous claims, further comprising: generating a preemptive potential response before receiving (1000) any spoken natural language statement from the user while a speech detection device is activated but no speech has been detected yet, wherein the preemptive potential response is based on either the user's past interaction history or predefined system prompts adapted to encourage user engagement, and taking into account the preemptive potential response as current potential response if no spoken natural language statement is received from the user within a predefined time interval.

13. A computer program product for dynamic natural language communication between a human and a computing device, comprising computer-readable instructions that, when loaded into a memory of a computing device and executed by one or more processors of the computing device, cause the computing device to perform the computer-implemented method according to any of the previous claims.

14. A computing device (100) for dynamic natural language communication between a human (1) and the computing device, comprising a memory storing computer-readable instructions implementing functional units, and one or more processors adapted for executing the functional units, wherein the functional units are adapted to perform the computer-implemented method according to any of the claims 1 to 12 when being executed.
